# EUROPÄISCHE PATENTSCHRIFT

(11) **EP 2 835 592 B1**
(45) Veröffentlichungstag und Bekanntmachung des Hinweises auf die Patenterteilung: **28.06.2017**
(21) Anmeldenummer: 13189443.8
(22) Anmeldetag: 18.10.2013
(51) Int. Cl.: F24F 11/00, F24F 11/02, F24F 13/02, G01N 1/22, G01N 1/26, G08B 17/10, G08B 17/117

(54) **Einrichtung zur Entnahme eines Teilstroms aus einem in einem Lüftungskanal einer raumlufttechnischen Anlage strömenden gasförmigen Medium**
Device for removing a partial flow from a flowing gaseous medium in a ventilation channel of an air conditioning system
Dispositif de réception d'un courant partiel depuis un milieu gazeux s'écoulant dans un canal d'aération d'une installation de ventilation

(30) Priorität: 09.08.2013 EP 13179852
(43) Veröffentlichungstag der Anmeldung: 11.02.2015
(73) Patentinhaber: TROX GmbH, 47506 Neukirchen-Vluyn (DE)
(72) Erfinder: Wolters, Thomas, 41812 Erkelenz (DE); Ingenbold, Peter, 45896 Gelsenkirchen (DE)
(74) Vertreter: Dr. Stark & Partner Patentanwälte mbB

(56) Entgegenhaltungen:
- EP-A1- 2 216 637
- US-A1- 2008 257 011
- US-A1- 2013 160 571

## Beschreibung

Die Erfindung betrifft eine Einrichtung zur Entnahme eines Teilstroms aus einem in einem Lüftungskanal einer raumlufttechnischen Anlage strömenden gasförmigen Mediums, wobei die Einrichtung einerseits einen, vorzugsweise außerhalb des Lüftungskanals angeordneten, Detektionsbereich und andererseits ein Messrohr umfasst, das sich zwischen gegenüberliegenden Wandungsbereichen des Lüftungskanals in dem Lüftungskanal erstreckt und orthogonal zur Strömungsrichtung des strömenden Mediums ausgerichtet ist, wobei in dem Messrohr eine, sich in Längserstreckung des Messrohres erstreckende, Entnahmekammer vorgesehen ist, die wenigstens eine angeströmte Eintrittsöffnung zum Eintritt des gasförmigen Mediums aus dem Lüftungskanal in die Entnahmekammer umfasst.

Im eingebauten Zustand ist das Messrohr vorzugsweise so ausgerichtet, dass jede Entnahmeöffnung im angeströmten Bereich, d. h. in dem Bereich, der in Strömungsrichtung gesehen vor der breitesten Stelle des Messrohres liegt, angeordnet ist. Eine aus der Praxis bekannte Einrichtung weist ein sich zwischen zwei gegenüberliegenden Wandungsbereichen erstreckendes Messrohr mit einer Entnahmekammer auf. Um ein Einströmen des gasförmigen Mediums über den kompletten Querschnittes des Lüftungskanals zu ermöglichen, sind über die ganze Länge der Entnahmekammer Eintrittsöffnungen vorgesehen. Als Nachteil erweist sich, dass nicht über jede der vielen Entnahmeöffnung die gleiche Menge in die Entnahmekammer einströmen kann. So strömt über die Entnahmeöffnung, die dem Detektionsbereich am nächsten angeordnet ist, die größte Menge und über die Entnahmeöffnung, die im größten Abstand zum Detektionsbereich angeordnet ist, die geringste Menge in die Entnahmekammer ein.

Aus der EP 2 216 637 A1 ist eine Einrichtung zur Entnahme einer Luftprobe aus einem Luftkanal gemäß dem Oberbegriff von Anspruch 1 bekannt. Die US 2008/0257011 A1 beschreibt eine Vorrichtung zur Probenentnahme aus einem Luftkanal. Aufgabe der Erfindung ist es, die vorgenannten Nachteile zu vermeiden und eine Einrichtung anzugeben, die ein möglichst gleichmäßiges Einströmen des gasförmigen Mediums über alle in dem Messrohr vorgesehenen Entnahmeöffnungen ermöglicht.

Diese Aufgabe wird durch eine Einrichtung mit den Merkmalen von Anspruch 1 gelöst. Dabei ist zumindest eine weitere, insbesondere in dem Messrohr angeordnete, Entnahmekammer vorgesehen, die ebenfalls wenigstens eine angeströmte Eintrittsöffnung aufweist, wobei die Eintrittsöffnungen verschiedener Entnahmekammern auf einer unterschiedlichen Höhe des Lüftungskanal-Querschnittes angeordnet sind und wobei sämtliche Entnahmekammern in denselben Detektionsbereich münden, und wobei ferner
- entweder: die Entnahmekammern zumindest entlang der Strömung unterschiedlich große Querschnittsflächen aufweisen
- oder: die Entnahmekammern gleich große Querschnittsflächen aufweisen und zumindest in jeder weiteren, über die erste Entnahmekammer hinausgehenden Entnahmekammern, vorzugsweise in jeder Entnahmekammer, entlang der Strömung an wenigstens einer Stelle ein die Querschnittsfläche reduzierendes Element vorgesehen ist, so dass in allen Entnahmekammern unterschiedlich große freie Querschnittflächen, d.h. unterschiedlich große Austrittsquerschnittsflächen, verbleiben.
- oder aber: die Entnahmekammern gleich große Querschnittsflächen aufweisen und zumindest in Richtung der Strömung gesehen hinter jeder weiteren, über die erste Entnahmekammer hinausgehenden Entnahmekammer, ein die Querschnittsfläche reduzierendes Element vorgesehen ist, welches als blendenförmiges Abschlusselement ausgebildet ist, so dass für alle Entnahmekammern unterschiedlich große freie Austrittsquerschnittsflächen resultieren.

Bevorzugte Ausführungsformen sind in den abhängigen Ansprüchen definiert.

Im eingebauten Zustand ist das Messrohr vorzugsweise so ausgerichtet, dass die Entnahmeöffnung(en) im angeströmten Bereich, d. h. in dem Bereich, der in Strömungsrichtung gesehen vor der breitesten Stelle des Messrohres liegt, angeordnet ist(sind). Die Entnahmekammern können sich über die komplette Länge des Messrohres erstrecken. Sofern eine Entnahmekammer mehrere Entnahmeöffnungen aufweist, sind diese Entnahmeöffnungen so zueinander angeordnet, dass in diese betreffende Entnahmekammer das gasförmige Medium aus einem kleineren Bereich bezogen auf den Lüftungskanal-Querschnitt einströmen kann. Durch die erfindungsgemäße Ausgestaltung ist der Druckverlust in allen Entnahmekammern gleich, so dass über jede Entnahmekammer die gleiche Luftmenge in den Detektionsbereich strömen kann. Mit zunehmendem Abstand zwischen den beiden äußersten Entnahmeöffnungen, d. h. zwischen den am weitesten voneinander beabstandet angeordneten Entnahmeöffnungen, bietet sich eine größere Anzahl an Entnahmekammern an.

Die Ausgestaltungen der die Querschnittsfläche reduzierenden Elemente können unterschiedlich ausgebildet sein. Als ein die Querschnittsfläche reduzierendes Element kann in einer Wandung einer Entnahmekammer zur Erzielung einer Einschnürung beispielsweise eine punktuelle oder umlaufende Wölbung eingebracht werden, was zu einer Verringerung der Querschnittsfläche führt.

Sofern die Entnahmekammern gleich große Querschnittsflächen aufweisen, kann zumindest in Richtung der Strömung gesehen hinter jeder weiteren, über die erste Entnahmekammer hinausgehenden Entnahmekammer, ein die Querschnittsfläche reduzierendes Element vorgesehen sein. Dieses Element kann als blendenförmiges Abschlusselement ausgebildet sein, so dass für alle Entnahmekammern unterschiedlich große freie Austrittsquerschnittsflächen resultieren. Das Abschlusselement weist beispielsweise eine der Anzahl an zu überdeckenden Entnahmekammern korrespondierende Anzahl an Öffnungen auf. Die Entnahmekammer, bei der der Abstand zwischen den dieser Entnahmekammer zugeordneten Entnahmeöffnungen und dem Abschlusselement am größten ist, weist die größte Öffnung auf. Die Öffnungen der anderen Entnahmekammern sind entsprechend dem Abstand zwischen den der jeweiligen Entnahmekammer zugeordneten Entnahmeöffnungen und dem Abschlusselement dimensioniert. Aufgrund der unterschiedlichen Größe der Öffnungen resultieren für alle Entnahmekammern unterschiedlich große freie Austrittsquerschnittsflächen.

Alternativ kann die zum Strömen des Mediums zur Verfügung stehende minimale Querschnittsfläche entlang der Strömung in der jeweiligen Entnahmekammer mit zunehmendem Abstand der Eintrittsöffnung(en) zu dem Detektionsbereich größer sein.

Zumindest ein die Querschnittsfläche reduzierendes Element kann als in einer Entnahmekammer angeordnete Blende ausgebildet sein. Die Blende kann beispielsweise in jede Entnahmekammer eingesetzt werden.

Das blendenförmige Abschlusselement kann so ausgebildet sein, dass für mehrere, insbesondere für alle, Entnahmekammern unterschiedlich große freie Austrittsquerschnittsflächen resultieren. Das Abschlusselement ist in Richtung der Strömung gesehen hinter den Entnahmekammern und damit zwischen dem Detektionsbereich und dem Messrohr angeordnet. Das Abschlusselement ist so ausgestaltet, dass es in jeder Entnahmekammer den Querschnitt in dem gewünschten Umfang reduziert. Hierzu ist jeder Entnahmekammer zumindest eine in dem Anschlusselement vorgesehene Öffnung zugeordnet.

Das Messrohr kann rund ausgebildet sein, und jede Entnahmekammer kann kreissegmentartig ausgebildet sein. In diesem Fall weist eine Entnahmekammer eine Ausgestaltung eines Tortenstückes auf.

Das Messrohr kann einen sichelförmigen Querschnitt aufweisen, wobei vorzugsweise die Entnahmekammern nebeneinander verteilt über den Querschnitt angeordnet sind. Die Symmetrieachse der Sichel ist vorzugsweise in Strömungsrichtung ausgerichtet, so dass damit das sichelförmig ausgebildete Messrohr quer zur Strömungsrichtung ausgerichtet ist.

Zumindest eine Eintrittsöffnung kann rund ausgebildet sein.

Zumindest eine Eintrittsöffnung kann als Schlitz ausgebildet sein, um ein Einströmen des gasförmigen Mediums über einen größeren Bereich zu ermöglichen.

Ferner kann zumindest eine, insbesondere in dem Messrohr angeordnete, Kammer mit zumindest einem, sich insbesondere über die ganze Länge der Kammer erstreckenden, Schlitz vorgesehen sein. Die Austrittskammer erstreckt sich vorzugsweise über die ganze Länge des Messrohrs. Der Schlitz kann auf der Abströmseite oder auf der Anströmseite der Kammer angeordnet sein. Eine solche separate Kammer kann beispielsweise zur Strömungsgeschwindigkeitsüberwachung im Bereich des Detektionsbereiches verwendet werden.

Es bietet sich an, wenn zumindest eine, insbesondere in dem Messrohr angeordnete, vorzugsweise sich über die Länge des Messrohres erstreckende, Austrittskammer mit zumindest einer Austrittsöffnung vorgesehen ist. Dabei bietet sich an, wenn zumindest eine Austrittsöffnung, vorzugsweise jede Austrittsöffnung, auf der Abströmseite des Messrohres angeordnet ist.

Im Folgenden werden in den Zeichnungen dargestellte Ausführungsbeispiele der Erfindung erläutert. Es zeigen:
- Fig. 1: eine Seitenansicht auf eine erfindungsgemäße, in einem Lüftungskanal montierte Einrichtung,
- Fig. 2: einen Schnitt in Richtung II-II durch ein Messrohr nach Fig. 3,
- Fig. 3: eine Seitenansicht auf ein Messrohr,
- Fig. 4: eine schräge Draufsicht auf ein die Querschnittsfläche einer Entnahmekammer reduzierendes Element,
- Fig. 5: eine schräge Draufsicht auf ein in Richtung II-II geschnitten dargestelltes Messrohr,
- Fig. 6: einen Schnitt durch eine alternative Ausgestaltung eines Messrohres,
- Fig. 7: ein Draufsicht auf ein Messrohr nach Fig. 3 und
- Fig. 8: eine Draufsicht auf ein Abschlusselement zur Verwendung in Zusammenhang mit einem Messrohr nach Fig. 3.

In allen Figuren werden für gleiche bzw. gleichartige Bauteile übereinstimmende Bezugszeichen verwendet.

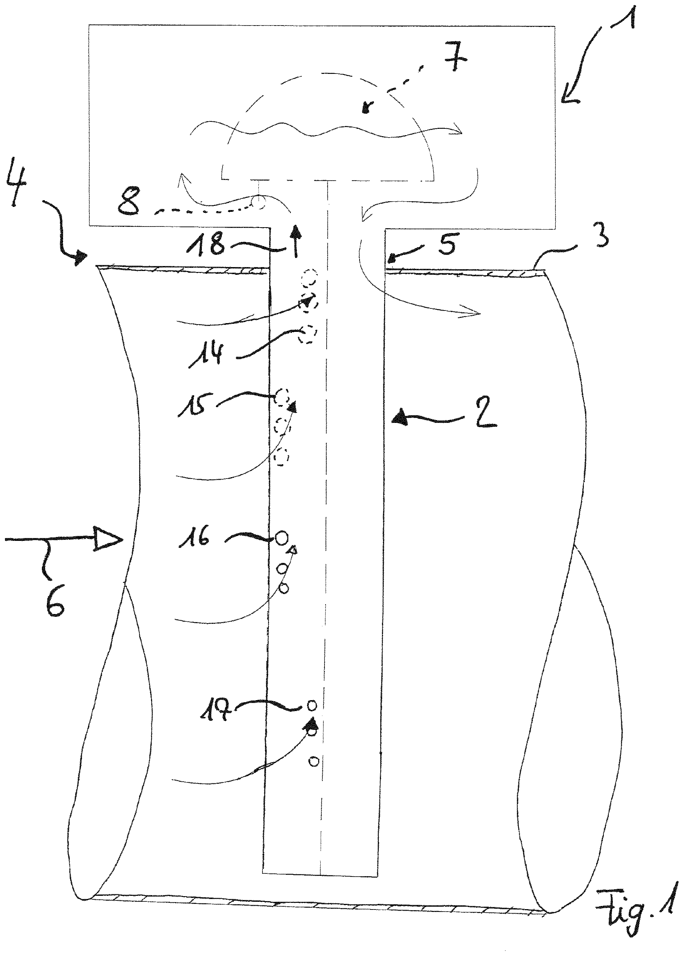

Fig. 1 zeigt eine Einrichtung, die einen Detektionsbereich 1 und ein Messrohr 2 umfasst. Der Detektionsbereich 1 ist außerhalb eines Wandungsbereiches 3 aufweisenden Lüftungskanals 4 angeordnet. Das Messrohr 2 ist durch eine Ausnehmung 5 in dem Lüftungskanal 4 in das Innere des Lüftungskanals 4 eingeführt.

Die Einrichtung dient zur Entnahme eines Teilstroms aus einem in dem Lüftungskanal 4 einer raumlufttechnischen Anlage in Richtung des Pfeils 6 (Strömungsrichtung) strömenden gasförmigen Mediums. Der Detektionsbereich 1 ist nicht im Detail dargestellt. In dem Detektionsbereich 1 kann beispielsweise ein Sensor 7 zur Rauchdetektion oder zur Bestimmung der Zusammensetzung des gasförmigen Mediums vorgesehen sein. Auch können Sensoren 7 beispielsweise zur Bestimmung der Luftfeuchtigkeit oder von Schadgasen vorgesehen sein. Auch kann in dem Detektionsbereich 1 die Temperatur oder ein Abkühlverhalten bestimmt werden, um beispielweise die Geschwindigkeit zu bestimmen. Hierzu ist in dem dargestellten Ausführungsbeispiel ein Heißleiter 8 in Form eines NTC-Widerstandes vorgesehen. Der Heißleiter 8 leitet bei hohen Temperaturen den elektrischen Strom besser als bei tiefen Temperaturen und kann insoweit als Luftgeschwindigkeitsmesssensor eingesetzt werden.

Das Messrohr 2 erstreckt sich zwischen zwei gegenüberliegenden Wandungsbereichen 3 des Lüftungskanals 4 und ist orthogonal zur Strömungsrichtung 6 des strömenden Mediums ausgerichtet.

Bei dem in den Fig. 1 bis 3 dargestellten Ausführungsbeispielen sind in dem Messrohr 2 insgesamt vier Entnahmekammern 9 bis 12 und eine Austrittskammer 13 vorgesehen. Jede Entnahmekammer 9 bis 12 weist insgesamt drei Entnahmeöffnungen 14 bis 17 auf, wobei - wie in Fig. 1 dargestellt - die Eintrittsöffnungen 14 bis 17 der vier verschiedenen Entnahmekammern 9 bis 12 auf einer unterschiedlichen Höhe des Lüftungskanal-Querschnittes angeordnet sind. In der Austrittskammer 13 ist zumindest eine Austrittsöffnung vorgesehen.

Das Messrohr 2 ist rund ausgebildet. Insoweit sind die Querschnittsflächen der Entnahmekammern 9 bis 12 kuchenstückartig ausgebildet und nehmen etwas weniger als die Hälfte der Gesamtquerschnittsfläche des Messrohres 2 ein. In der verbleibenden Gesamtquerschnittsfläche befindet sich die Austrittskammer 13. Die Querschnittsflächen der vier Entnahmekammern 9 bis 12 sind gleich groß. Die Größe der Austrittskammer 13 und die Anordnung der Austrittsöffnung(en) ist nicht relevant.

Ein Teil des gasförmigen Mediums strömt durch die Entnahmeöffnungen 14 bis 17 in eine der vier Entnahmekammern 9 bis 12. Die Entnahmekammern 9 bis 12 münden in den gemeinsamen Detektionsbereich 1, so dass das in den Entnahmekammern 9 bis 12 befindliche gasförmige Medium in Richtung der Strömung 18 in den Detektionsbereich 1 strömt. Nach Passieren des Detektionsbereiches 1 strömt das gasförmige Medium über die Austrittskammer 13, die zumindest eine Austrittsöffnung aufweist, in den Lüftungskanal 4 zurück.

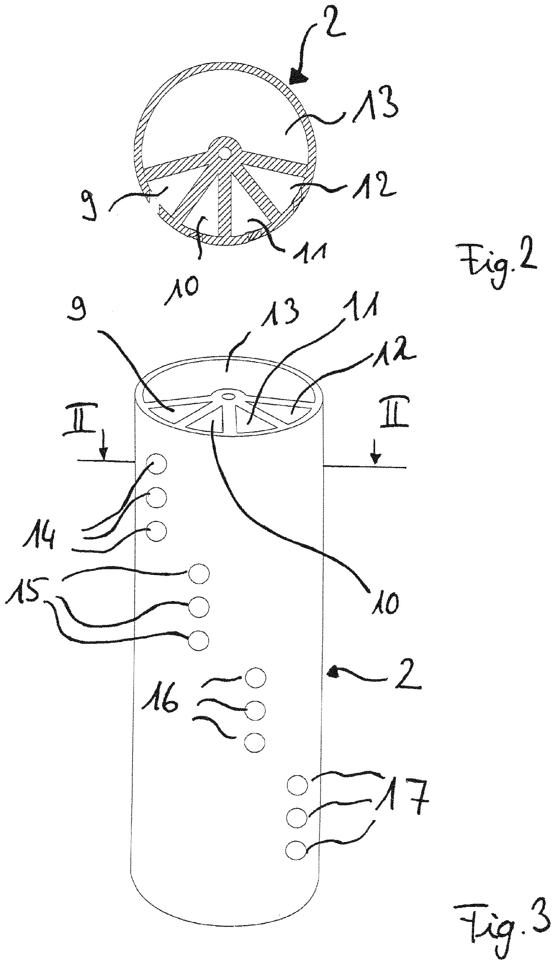

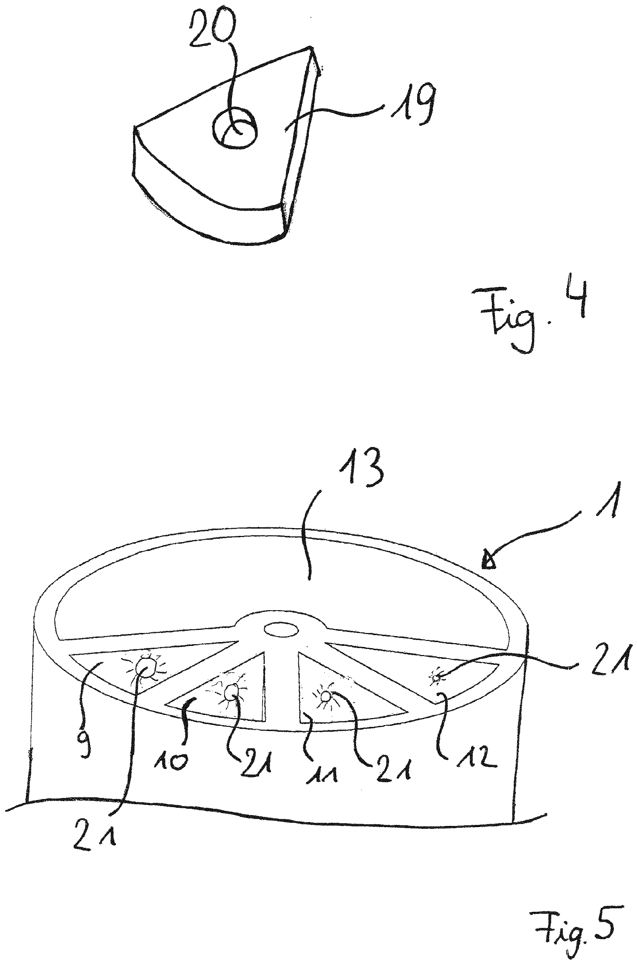

Wie Fig. 3 zu entnehmen ist, nimmt der Abstand zwischen den Entnahmeöffnungen einerseits und dem Detektionsbereich 1 andererseits von der Entnahmekammer 12 hin zur Entnahmekammer 9 ständig ab. Um einen gleichen Druckverlust in allen Entnahmekammern 9 bis 12 zu gewährleisten, ist bei dem Ausführungsbeispiel nach den Fig. 1 bis 3 in jeder Entnahmekammer 9 bis 12 entlang der Strömung 18 ein den Strömungsquerschnitt reduzierendes Element 19 als Blende vorgesehen, das in Fig. 4 dargestellt ist.

Das den Strömungsquerschnitt reduzierende Element 19 ist auf die Kontur der jeweiligen Entnahmekammer 9 bis 12 abgestimmt. Jedes Element 19 weist eine Öffnung 20 auf, die die zur Verfügung stehende Querschnittsfläche zum Strömen des gasförmigen Mediums darstellt. Die Öffnung 20 ist bei dem Element 19, das in die Entnahmekammer 9 eingesetzt wird, am kleinsten, wobei die Größe der Öffnungen 20 dann zur Entnahmekammer 12 hin zunimmt.

Damit ist die zum Strömen des Mediums zur Verfügung stehende minimale Querschnittsfläche entlang der Strömung 18 in der Entnahmekammer 9 am kleinsten und in der Entnahmekammer 12 mit dem größten Abstand zwischen den Eintrittsöffnungen 17 und dem Detektionsbereich 1 am größten.

In Fig. 5 ist ein Ausführungsbeispiel dargestellt, bei dem das die Querschnittsfläche reduzierende Element 19 als lokale Einschnürung in Form einer in einer Wandung einer Entnahmekammer 9 bis 12 eingebrachten Wölbung 21 dargestellt ist. Die Wölbung 21 ist hinsichtlich ihrer Größe so abgestimmt, dass die Wölbung 21 in der Entnahmekammer 12 am kleinsten und zur Entnahmekammer 9 hin zunimmt.

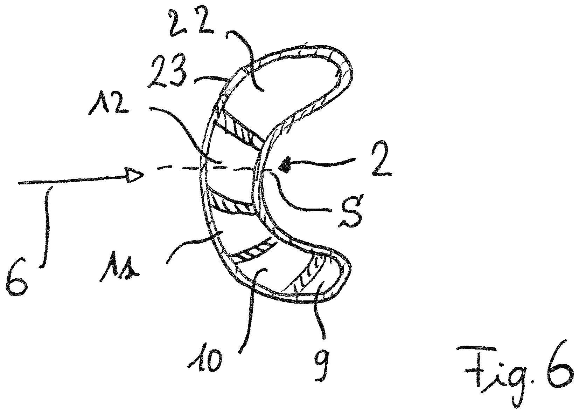

Fig. 6 zeigt einen Schnitt durch eine alternative Ausgestaltung eines Messrohres 2. Im Gegensatz zu den Ausführungsbeispielen nach den Fig. 1 bis 5 weist das Messrohr 2 nach Fig. 6 fünf Entnahmekammern 9 bis 12, 22 auf, die entlang der Strömung 18, d. h. in Richtung des in der betreffenden Entnahmekammer 9 bis 12, 22 strömenden Mediums gesehen, unterschiedlich große Querschnittsflächen aufweisen. Die Größe der Querschnittsflächen der Entnahmekammern 9 bis 12, 22 nimmt von der Entnahmekammer 9 bis zur Entnahmekammer 22 zu. Jede der Entnahmekammern 9 bis 12, 22 weist zumindest eine Entnahmeöffnung auf, wobei in der Schnittdarstellung nach Fig. 6 lediglich die Entnahmeöffnung 23 der Entnahmekammer 22 zu erkennen ist.

Insoweit ist der Abstand zwischen den jeweiligen Entnahmeöffnungen 14 bzw. 17, 23 einerseits und dem nicht dargestellten Detektionsbereich 1 andererseits bei der Entnahmekammer 9 am kleinsten und nimmt zur Entnahmekammer 22 hin zu.

Das Messrohr 2 hat einen sichelförmigen Querschnitt, wobei die Entnahmeöffnungen 14 bzw. 17, 23 auf der angeströmten Seite des Messrohres 2 angeordnet sind. Die Entnahmekammern 9 bis 12 und 22 sind nebeneinander verteilt über den Querschnitt angeordnet. Die Symmetrieachse S der Sichel bezogen auf die Außenkontur des Messrohres 2 ist in Strömungsrichtung 6 ausgerichtet, so dass damit das sichelförmig ausgebildete Messrohr 2 quer zur Strömungsrichtung 6 angeordnet ist.

Bei dem dargestellten Ausführungsbeispiel ist keine separate Austrittskammer 13 vorhanden. Der Teilstrom kann nach Passieren des Detektionsbereichs 1 beispielsweise durch eine in dem Wandungsbereich 3 des Lüftungskanals 4 befindliche Austrittsöffnung wieder in den Lüftungskanal 4 zurückgeführt werden. Der Detektionsbereich 1 kann hierzu beispielsweise mit einem Schlauch mit der Austrittsöffnung verbunden sein. Alternativ kann der Detektionsbereich 1 in einem abgedichteten Gehäuse vorgesehen sein, wobei die Austrittsöffnung innerhalb des von dem Gehäuse umschlossenen Bereiches liegt.

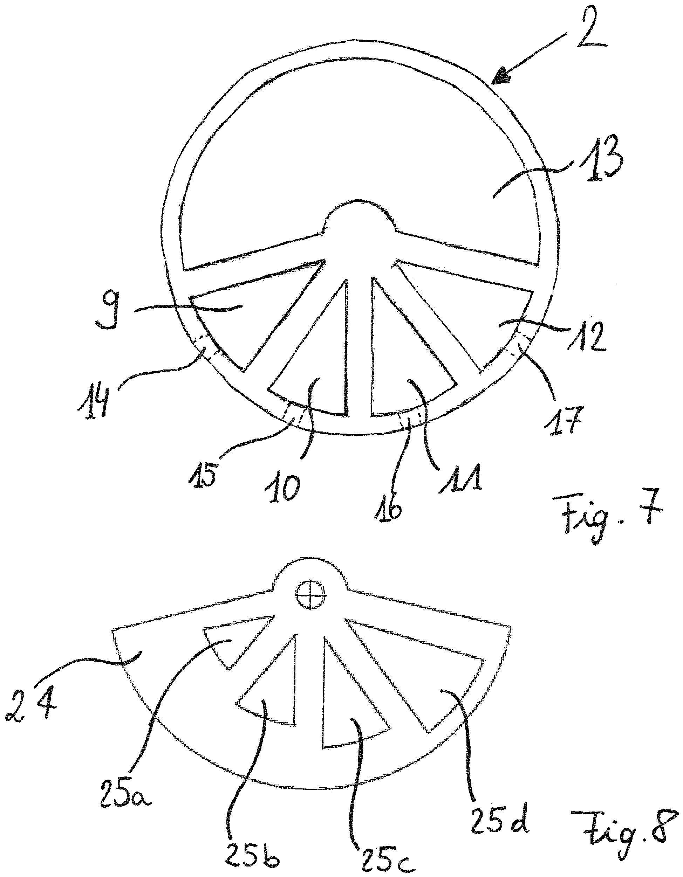

Fig. 7 zeigt eine Draufsicht auf ein Messrohr 2, das vier Entnahmekammern 9 bis 12, die in dem dargestellten Ausführungsbeispiel eine gleich große Querschnittsfläche aufweisen, und eine Austrittskammer 13 umfasst. In Fig. 8 ist ein Abschlusselement 24 dargestellt, dass zwischen dem Messrohr 2 und dem Detektionsbereich 1 angeordnet ist. Die Außenkontur des Abschlusselementes 24 ist auf die Ausgestaltung der vier Entnahmekammern 9 bis 12 des Messrohres 2 abgestellt.

Das Abschlusselement 24 ist damit in Richtung der Strömung 18 gesehen hinter den Entnahmekammern 9, 10, 11, 12 gesehen angeordnet. Das Abschlusselement 24 weist vier Öffnungen 25a-25d auf, die in dem dargestellten Ausführungsbeispiel dreieckförmig ausgebildet sind. Die Öffnung 25a, die der Entnahmekammer 9 zugeordnet ist, ist am kleinsten. Die Größe der Öffnungen nimmt zur Öffnung 25d, die der Entnahmekammer 12 zugeordnet ist, hin zu. Bei der Entnahmekammer 12 ist der Abstand zwischen den dieser Entnahmekammer zugeordneten Entnahmeöffnungen 17 und dem Abschlusselement 24 am größten.

Aufgrund der unterschiedlichen Größe der Öffnungen 25a-25d resultieren für alle Entnahmekammern 9, 10, 11, 12 unterschiedlich große freie Austrittsquerschnittsflächen.

## Patentansprüche

1. Einrichtung zur Entnahme eines Teilstroms aus einem in einem Lüftungskanal (4) einer raumlufttechnischen Anlage strömenden gasförmigen Mediums, wobei die Einrichtung einerseits einen, vorzugsweise außerhalb des Lüftungskanals (4) angeordneten, Detektionsbereich (1) und andererseits ein Messrohr (2) umfasst, das sich zwischen gegenüberliegenden Wandungsbereichen (3) des Lüftungskanals (4) in dem Lüftungskanal (4) erstreckt und orthogonal zur Strömungsrichtung (6) des strömenden Mediums ausgerichtet ist, wobei in dem Messrohr (2) eine, sich in Längserstreckung des Messrohres (2) erstreckende, Entnahmekammer (9) vorgesehen ist, die wenigstens eine angeströmte Eintrittsöffnung (14) zum Eintritt des gasförmigen Mediums aus dem Lüftungskanal (4) in die Entnahmekammer (9) umfasst, **dadurch gekennzeichnet, dass** zumindest eine weitere, insbesondere in dem Messrohr (2) angeordnete, Entnahmekammer (10, 11, 12, 22) vorgesehen ist, die ebenfalls wenigstens eine angeströmte Eintrittsöffnung (15 bzw. 16 bzw. 17 bzw. 23) aufweist, wobei die Eintrittsöffnungen (14, 15, 16, 17, 23) verschiedener Entnahmekammern (9, 10, 11, 12, 22) auf einer unterschiedlichen Höhe des Lüftungskanal-Querschnittes angeordnet sind und wobei sämtliche Entnahmekammern (9, 10, 11, 12, 22) in denselben Detektionsbereich (1) münden, und wobei ferner
entweder
die Entnahmekammern (9, 10, 11, 12, 22) zumindest entlang der Strömung (18) unterschiedlich große Querschnittsflächen aufweisen
oder
die Entnahmekammern (9, 10, 11, 12, 22) gleich große Querschnittsflächen aufweisen und zumindest in jeder weiteren, über die erste Entnahmekammer (9) hinausgehenden Entnahmekammer (10, 11, 12, 22), vorzugsweise in jeder Entnahmekammer (9, 10, 11, 12, 22), entlang der Strömung (18) an wenigstens einer Stelle ein die Querschnittsfläche reduzierendes Element (19) vorgesehen ist, so dass in allen Entnahmekammern (9, 10, 11, 12, 22) unterschiedlich große freie Querschnittsflächen verbleiben
oder aber
die Entnahmekammern (9, 10, 11, 12, 22) gleich große Querschnittsflächen aufweisen und zumindest in Richtung der Strömung (18) gesehen hinter jeder weiteren, über die erste Entnahmekammer (9) hinausgehenden Entnahmekammer (10, 11, 12, 22), ein die Querschnittsfläche reduzierendes Element vorgesehen ist, welches als blendenförmiges Abschlusselement (24) ausgebildet ist, so dass für alle Entnahmekammern (9, 10, 11, 12, 22) unterschiedlich große freie Austrittsquerschnittsflächen resultieren.

2. Einrichtung nach Anspruch 1, **dadurch gekennzeichnet, dass** die zum Strömen des Mediums zur Verfügung stehende minimale Querschnittsfläche entlang der Strömung (18) in der jeweiligen Entnahmekammer (9, 10, 11, 12, 22) mit zunehmendem Abstand der Eintrittsöffnung(en) (14 bzw. 15 bzw. 16 bzw. 17 bzw. 23) zu dem Detektionsbereich (1) größer ist.

3. Einrichtung nach einem der vorhergehenden Ansprüche, **dadurch gekennzeichnet, dass** zumindest ein die Querschnittsfläche reduzierendes Element (19) als in einer Entnahmekammer (9, 10, 11, 12, 22) angeordnete Blende ausgebildet ist.

4. Einrichtung nach einem der vorhergehenden Ansprüche, **dadurch gekennzeichnet, dass** das blendenförmige Abschlusselement (24) so ausgebildet ist, dass für mehrere, insbesondere für alle, Entnahmekammern (9, 10, 11, 12, 22) unterschiedlich große freie Austrittsquerschnittsflächen resultieren.

5. Einrichtung nach einem der vorhergehenden Ansprüche, **dadurch gekennzeichnet, dass** das Messrohr (2) rund ausgebildet ist und jede Entnahmekammer (9, 10, 11, 12, 22) kreissegmentartig ausgebildet ist.

6. Einrichtung nach einem der Ansprüche 1 bis 4, **dadurch gekennzeichnet, dass** das Messrohr (2) einen sichelförmigen Querschnitt aufweist, wobei vorzugsweise die Entnahmekammern (9, 10, 11, 12, 22) nebeneinander verteilt über den Querschnitt angeordnet sind.

7. Einrichtung nach einem der vorhergehenden Ansprüche, **dadurch gekennzeichnet, dass** zumindest eine Eintrittsöffnung (14 bzw. 15 bzw. 16 bzw. 17 bzw. 23) rund ausgebildet ist.

8. Einrichtung nach einem der vorhergehenden Ansprüche, **dadurch gekennzeichnet, dass** zumindest eine Eintrittsöffnung (14 bzw. 15 bzw. 16 bzw. 17 bzw. 23) als Schlitz ausgebildet ist.

9. Einrichtung nach einem der vorhergehenden Ansprüche, **dadurch gekennzeichnet, dass** zumindest eine, insbesondere in dem Messrohr (2) angeordnete, Kammer mit zumindest einem, insbesondere sich über die ganze Länge der Kammer erstreckenden, Schlitz vorgesehen ist.

10. Einrichtung nach einem der vorhergehenden Ansprüche, **dadurch gekennzeichnet, dass** zumindest eine, insbesondere in dem Messrohr (2) angeordnete, vorzugsweise sich über die Länge des Messrohres (2) erstreckende, Austrittskammer (13) mit zumindest einer Austrittsöffnung vorgesehen ist.

## Claims

1. Device for removing a partial flow from a flowing gaseous medium in a ventilation channel (4) of an air conditioning system, wherein the device comprises on the one hand a detection region (1), preferably arranged outside the ventilation channel (4) and, on the other, a measurement tube (2), which extends in the ventilation channel (4) between opposing wall regions (3) of the ventilation channel (4) and is aligned orthogonally to the flow direction (6) of the flowing medium, wherein a removal chamber (9) is provided in the measurement tube (2), extending in the longitudinal extension of the measurement tube (2), which comprises at least one inlet opening (14), to which flow is directed, for the inlet of the gaseous medium from the ventilation channel (4) into the removal chamber (9), **characterised in that** at least one further removal chamber (10, 11, 12, 22) is provided, arranged in the measurement tube (2), which likewise comprises at least one inlet opening (15 or 16 or 17 or 23 respectively), to which flow is directed, wherein the inlet openings (14, 15, 16, 17, 23) of different removal chambers (9, 10, 11, 12, 22) are arranged at different heights of the ventilation channel cross-section and wherein all the removal chambers (9, 10, 11, 12, 22) open into the same detection region (1), and wherein, further
either
the removal chambers (9, 10, 11, 12, 22) comprise cross-section surfaces of different sizes at least along the flow (18)
or
the removal chambers (9, 10, 11, 12, 22) comprise cross-section surfaces of the same size, and at least in every further removal chamber (10, 11, 12, 22) extending beyond the first removal chamber (9), and preferably in every removal chamber (9, 10, 11, 12, 22), along the flow (18), at least at one point an element (19) is provided which reduces the cross-section surface area, such that free cross-section surface areas of different sizes remain in all the removal chambers (9, 10, 11, 12, 22)
or, however
the removal chambers (9, 10, 11, 12, 22) comprise cross-section surfaces of the same surface area, and, seen at least in the direction of the flow (18), behind each further removal chamber (10, 11, 12, 22) extending beyond the first removal chamber (9), an element is provided which reduces the cross-section surface area, which is configured as a closure element (24) in the from of a screen, such that free outlet cross-section surface areas of different sizes result for all the removal chambers (9, 10, 11, 12, 22).

2. Device according to claim 1, **characterised in that** the minimum cross-section surface area available for the flowing of the medium along the flow (18) in the respective removal chamber (9, 10, 11, 12, 22) is in each case larger as the distance interval of the inlet opening(s) (14 or 15 or 16 or 17 or 23 respectively) to the detection region (1) increases.

3. Device according to any one of the preceding claims, **characterised in that** at least one element (19) reducing the cross-section surface area is configured as a screen arranged in a removal chamber (9, 10, 11, 12, 22).

4. Device according to any one of the preceding claims, **characterised in that** the closure element (24) in the form of a screen is configured in such a way that free outlet cross-section surface areas of different sizes result for all the removal chambers (9, 10, 11, 12, 22).

5. Device according to any one of the preceding claims, **characterised in that** the measurement tube (2) is configured as round, and each removal chamber (9, 10, 11, 12, 22) is configured in the form of a segment of a circle.

6. Device according to any one of claims 1 to 4, **characterised in that** the measurement tube (2) exhibits a sickle-shaped cross-section, wherein, preferably, the removal chambers (9, 10, 11, 12, 22) are arranged distributed next to one another over the cross-section.

7. Device according to any one of the preceding claims, **characterised in that** at least one intake opening (14 or 15 or 16 or 17 or 23 respectively) is configured as round.

8. Device according to any one of the preceding claims, **characterised in that** at least one intake opening (14 or 15 or 16 or 17 or 23 respectively) is configured as a slot.

9. Device according to any one of the preceding claims, **characterised in that** at least one chamber, arranged in particular in the measurement tube (2), is provided with at least one slot, in particular extending over the entire length of the chamber.

10. Device according to any one of the preceding claims, **characterised in that** at least one outlet chamber (13), arranged in particular in the measurement tube (2), and preferably extending over the length of the measurement tube (2), is provided with at least one outlet opening.

## Revendications

1. Dispositif de prélèvement d'un courant partiel à partir d'un milieu gazeux s'écoulant dans un canal de ventilation (4) d'une installation aéraulique, lequel dispositif comprend, d'une part, une zone de détection (1) disposée de préférence en dehors du canal de ventilation (4) et, d'autre part, un tube de mesure (2) qui s'étend dans le canal de ventilation (4) entre des zones de parois (3) opposées du canal de ventilation (4) et est orienté orthogonalement par rapport à la direction d'écoulement (6) du milieu qui s'écoule, une chambre de prélèvement (9) qui s'étend suivant l'extension longitudinale du tube de mesure (2) étant prévue dans le tube de mesure (2), laquelle comprend au moins une ouverture d'entrée (14) exposée à l'écoulement pour l'entrée du milieu gazeux dans la chambre de prélèvement (9) depuis le canal de ventilation (4), **caractérisé en ce qu'**au moins une autre chambre de prélèvement (10, 11, 12, 22), en particulier disposée dans le tube de mesure (2), est prévue, qui présente également au moins une ouverture d'entrée (15, respectivement 16, respectivement 17, respectivement 23) exposée à l'écoulement, les ouvertures d'entrée (14, 15, 16, 17, 23) de différentes chambres de prélèvement (9, 10, 11, 12, 22) étant disposées à une hauteur différente de la section transversale du canal de ventilation et toutes les chambres de prélèvement (9, 10, 11, 12, 22) débouchant dans la même zone de détection (1), et en outre
soit
les chambres de prélèvement (9, 10, 11, 12, 22) présentant des surfaces de section transversale différentes au moins le long de l'écoulement (18),
soit
les chambres de prélèvement (9, 10, 11, 12, 22) présentant des surfaces de section transversale identiques et, au moins dans chaque autre chambre de prélèvement (10, 11, 12, 22) excédant la première chambre de prélèvement (9), de préférence dans chaque chambre de prélèvement (9, 10, 11, 12, 22), un élément (19) réduisant la surface de section transversale étant prévu à au moins un emplacement le long de l'écoulement (18), de sorte qu'il reste des surfaces de section transversale libres différentes dans toutes les chambres de prélèvement (9, 10, 11, 12, 22),
soit encore
les chambres de prélèvement (9, 10, 11, 12, 22) présentant des surfaces de section transversale identiques et, au moins vu dans la direction de l'écoulement (18), derrière chaque autre chambre de prélèvement (10, 11, 12, 22) excédant la première chambre de prélèvement (9), un élément réduisant la surface de section transversale étant prévu, lequel est réalisé sous la forme d'un élément terminal (24) en forme de diaphragme, afin qu'il en résulte des surfaces de section transversale de sortie libres différentes pour toutes les chambres de prélèvement (9, 10, 11, 12, 22).

2. Dispositif selon la revendication 1, **caractérisé en ce que** la surface de section transversale minimale disponible pour l'écoulement du milieu le long de l'écoulement (18) dans la chambre de prélèvement (9, 10, 11, 12, 22) respective devient plus grande lorsque la distance de la ou des ouverture(s) d'entrée (14, respectivement 15, respectivement 16, respectivement 17, respectivement 23) à la zone de détection (1) augmente.

3. Dispositif selon l'une des revendications précédentes, **caractérisé en ce qu'**au moins un élément (19) réduisant la surface de section transversale est réalisé sous la forme d'un diaphragme disposé dans une chambre de prélèvement (9, 10, 11, 12, 22).

4. Dispositif selon l'une des revendications précédentes, **caractérisé en ce que** l'élément terminal (24) en forme de diaphragme est conçu de façon qu'il en résulte pour plusieurs, en particulier pour toutes les chambres de prélèvement (9, 10, 11, 12, 22) des surfaces de section transversale de sortie libres différentes.

5. Dispositif selon l'une des revendications précédentes, **caractérisé en ce que** le tube de mesure (2) est de forme ronde et chaque chambre de prélèvement (9, 10, 11, 12, 22) est en forme de segment de cercle.

6. Dispositif selon l'une des revendications 1 à 4, **caractérisé en ce que** le tube de mesure (2) présente une section transversale en forme de croissant, les chambres de prélèvement (9, 10, 11, 12, 22) étant de préférence réparties les unes à côté des autres sur la section transversale.

7. Dispositif selon l'une des revendications précédentes, **caractérisé en ce qu'**au moins une ouverture d'entrée (14, respectivement 15, respectivement 16, respectivement 17, respectivement 23) est de forme ronde.

8. Dispositif selon l'une des revendications précédentes, **caractérisé en ce qu'**au moins une ouverture d'entrée (14, respectivement 15, respectivement 16, respectivement 17, respectivement 23) est réalisée sous la forme d'une fente.

9. Dispositif selon l'une des revendications précédentes, **caractérisé en ce qu'**au moins une chambre, disposée en particulier dans le tube de mesure (2), avec au moins une fente s'étendant en particulier sur toute la longueur de la chambre, est prévue.

10. Dispositif selon l'une des revendications précédentes, **caractérisé en ce qu'**au moins une chambre de sortie (13) avec au moins une ouverture de sortie, disposée en particulier dans le tube de mesure (2), s'étendant de préférence sur la longueur du tube de mesure (2), est prévue.
